# EUROPÄISCHE PATENTSCHRIFT

(11) **EP 0 396 028 B1**
(45) Veröffentlichungstag und Bekanntmachung des Hinweises auf die Patenterteilung: **20.07.1994**
(21) Anmeldenummer: 90107981.4
(22) Anmeldetag: 26.04.1990
(51) Int. Cl.: G05B 19/18

(54) **Verfahren zum Schleifen von Nocken einer Nockenwelle**
Process for grinding camshaft cams
Procédé pour le meulage d'un arbre à cames

(30) Priorität: 03.05.1989 DE 3914549
(43) Veröffentlichungstag der Anmeldung: 07.11.1990
(73) Patentinhaber: Fortuna-Werke Maschinenfabrik GmbH, D-70376 Stuttgart (DE)
(72) Erfinder: Clauss, Siegbert, D-7300 Esslingen (DE)
(74) Vertreter: Witte, Alexander, Dr.-Ing.

(56) Entgegenhaltungen:
- DE-A- 1 937 517
- DE-A- 2 654 949
- US-A- 3 619 581
- WERKSTATT UND BETRIEB. vol. 118, no. 8, August 1985, MUNCHEN DE Seiten 443 -448; Dr.-Ing. H. J. Wedeniwski: "Processrechnergesteurertes Produktions-Nockenschleifen, Maschinenkonzeption, Genauigkeit und Produktivität."

## Beschreibung

Die Erfindung betrifft ein Verfahren zum Schleifen von Nocken einer Nockenwelle unter Verwendung einer numerisch gesteuerten Nockenwellen-Schleifmaschine, bei der die Nockenwelle in einer Aufspannung um eine mit ihrer Längsachse zusammenfallende erste Achse (C-Achse) drehbar und ein Schleifschlitten mit einer Schleifscheibe entlang einer zweiten Achse (X-Achse) radial auf die Nockenwelle zustellbar ist, wobei die Drehung der Nockenwelle um die erste Achse in Abhängigkeit von der Verschiebung des Schleifschlittens entlang der zweiten Achse einstellbar ist und wobei zum Einstellen der ersten und zweiten Achse eine Folge von Steuerbefehlen abhängig von einer vorgegebenen Form des Nockens erstellt wird.

Ein Verfahren der vorstehend genannten Art ist allgemein bei numerisch gesteuerten Nockenwellen-Schleifmaschinen bekannt.

Es ist ferner bekannt, daß beim Schleifen von Nocken einer Nockenwelle verschiedenartige Formfehler auftreten, wenn die numerische Steuerung der Schleifmaschine sich ausschließlich an den vorgegebenen theoretischen Daten einer idealen Nockenkontur orientiert. Aus der Zeitschrift "Werkstatt und Betrieb", 1985, Band 118, Nr. 8, München, DE, Seite 443 bis 448 ist z.B. bekannt, mit vorgegebenen, auf einer idealen Nockenkontur beruhenden Steuerbefehlen zunächst im Probebetrieb eine Nockenwelle zu schleifen, diese dann auszumessen, die Formfehler festzustellen und anhand der Formfehler die Steuerbefehle für die numerische Steuerung zu modifizieren.

Darüberhinaus sind auch Algorithmen vorgeschlagen worden, um aus Maschinenkonstanten, Werkstückgrößen sowie Bearbeitungsparametern Formfehler vorauszubestimmen und von vorneherein entsprechende Korrekturen an den Steuerbefehlen anzubringen.

Diese bekannten Vorgehensweisen haben jedoch den gemeinsamen Nachteil, daß sie recht aufwendig sind, so daß für einen praktischen Einsatz einige Aufwendungen betrieben werden müssen und es in der Praxis nicht möglich ist, bereits installierte Maschinen entsprechend nachzurüsten.

Der Erfindung liegt demgegenüber die Aufgabe zugrunde, ein Verfahren der eingangs genannten Art dahingehend weiterzubilden, daS mit äußerst einfachen Verfahrensschritten eine Korrektur der wesentlichen auftretenden Formfehler ermöglicht wird.

Diese Aufgabe wird gelöst durch die folgenden Verfahrensschritte:
- zuerst Verdrehen der Aufspannung um die erste Achse und Verschieben des Schleifschlittens entlang der zweiten Achse entsprechend der Folge der Steuerbefehle in Abwesenheit einer in die Aufspannung eingespannten Nockenwelle;
- dabei Erfassen der von der Aufspannung eingenommenen Drehwinkel mittels eines Winkelsensors sowie der von dem Schleifschlitten durchmessenen Verschiebewege mittels eines Längensensors;
- Bilden der Differenzen der jeweils erfaßten Meßwerte für Drehwinkel und Verschiebeweg von den zugehörigen Werten der Steuerbefehle;
- Modifizieren der einzelnen Steuerbefehle in Abhängigkeit von den jeweiligen Differenzen;
- danach Einspannen einer Nockenwelle in die Aufspannung und Schleifen der Nocken mit der Folge der modifzierten Steuerbefehle.

Die der Erfindung zugrundeliegende Aufgabe wird auf diese Weise vollkommen gelöst, weil die Erfindung sich die Tatsache zunutze macht, daß der wesentliche Anteil der Nockenformfehler auf sogenannten Schleppfehlern der Nockenwellen-Schleifmaschine beruht.

Hierunter versteht man dynamische Fehler, die sich dadurch einstellen, daß an der Nockenwellen-Schleifmaschine im Betrieb erhebliche Massen bewegt werden müssen, wobei die auftretenden Trägheitskräfte umso größer sind, je mehr die Massen beschleunigt werden. Da man bei modernen Nockenwellen-Schleifmaschinen jedoch zu immer höheren Bearbeitungsgeschwindigkeiten übergeht und auch durch moderne Schleifscheibentechnologien immer höhere Zeitspanvolumina erzielbar sind, machen sich dynamische Schleppfehler der Nockenwellen-Schleifmaschine immer mehr bemerkbar.

Gemäß dem erfindungsgemäßen Verfahren werden diese dynamischen Schleppfehler dadurch kompensiert, daß zunächst ein Schleifvorgan ohne Werkstück simuliert Wird, mit anderen Worten, die Schleifmaschine wird, ohne daß sie einen Zerspanungsvorgang durchführt, entlang den vorgewebenen Koordinaten bewegt, und es werden die real durchmessenen Drehwinkel bzw. Verschiebewege gemessen. In diesen realen Meßwerten manifestieren sich die Schleppfehler als Abweichung von den theoretisch vorgegebenen Steuerbefehlen, so daß aus der Differenz der gemessenen Werte von den vorgegebenen Werten ein Korrektursignal gebildet werden kann, um die vorgegebenen Meßwerte zu kompensieren. Dies kann beispielsweise durch Wichtung, d.h. durch Multiplikation mit einem konstanten Faktor, geschehen.

Wenn dann die Nockenwellen-Schleifmaschine bei einem realen Schleifvorgang mit den modifizierten Steuerbefehlen betrieben wird, so sind die dynamischen Schleppfehler bereits kompensiert, und es entsteht ein Nocken mit der gewünschten idealen Kontur.

Zwar werden bei dem erfindungsgemäßen Verfahren diejenigen Formfehler nicht berücksichtigt, die sich aus dem speziellen Werkstück, beispeilsweise auß der Steifigkeit der Nockenwelle, ergeben, diese Fehler liegen jedoch erfahrungsgemäß in ihrem Betrag weit unterhalb den dynamischen Schleppfehlern, so daß dieser verbleibende Restfehler in Kauf genommen werden kann.

Dies gilt umso mehr deswegen, weil die nach dem erfindungsgemäßen Verfahren erforderlichen Schritte äußerst einfach durchzuführen sind, so daß sie mit geringem Aufwand nicht nur bei neuen Nockenwellen-Schleifmaschinen vorgesehen sondern auch bei bereits installierten Maschinen nachgerüstet werden können.

Weitere Vorteile der Erfindung ergeben sich aus der Beschreibung der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine äußerst schematisierte Ansicht einer Nockenwellen-Schleifmaschine, wie sie zur Durchführung des erfindungsgemäßen Verfahrens verwendet werden kann;
- Fig. 2: ein Nockendiagramm zur Erläuterung des erfindungsgemäßen Verfahrens.

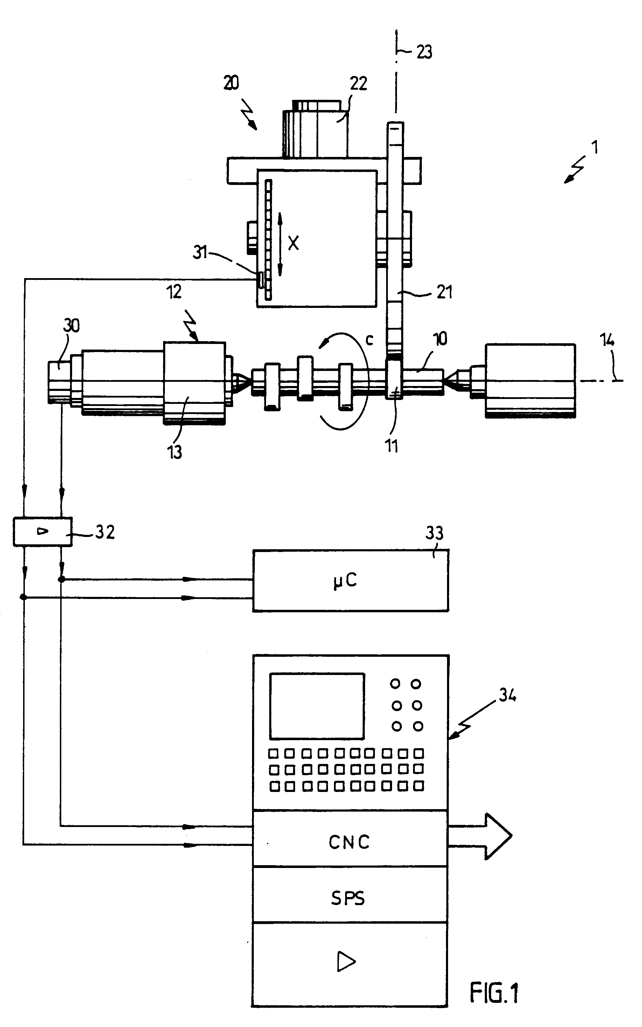

In Fig. 1 bezeichnet 1 insgesamt eine Nockenwellen-Schleifmaschine mit der das erfindungsgemäße Verfahren ausgeführt werden kann.

Eine Nockenwelle 10 mit Nocken 11 ist in herkömmlicher Weise in einer drehbaren Aufspannung 12 gehalten. Die Aufspannung 12 kann mittels eines Motors 13 in definierten Winkelschritten verdreht werden. Die Verdrehung der Nockenwelle 11 geschieht um ihre Längsachse, nämlich die sog. C-Achse 14 der Schleifmaschine 1.

Ein Schleifschlitten 20 ist ebenfalls in herkömmlicher Weise mit einer Schleifscheibe 21 versehen und mittels eines Motors 22 in Richtung einer zweiten Achse 23, der sog. X-Achse, radial auf die Nockenwelle 10 zustellbar. In der in Fig. 1 eingezeichneten Stellung befindet sich die Schleifscheibe 21 gerade in Anlage an einem Nocken 11 der Nockenwelle 10.

Ein Winkelsensor 30 ist an der Aufspannung 12 angeordnet, um die Winkelschritte, d.h. die Drehung um die erste Achse 14, die C-Achse, zu erfassen.

In entsprechender Weise ist ein Längensensor 31 am Schleifschlitten 20 angeordnet, um die Verschiebung der Schleifscheibe 21 entlang der zweiten Achse 23, der X-Achse, zu erfassen.

Die Ausgangssignale der Sensoren 30, 31 sind auf eine Impulsformer-Elektronik 32 geführt, in der die Sensorsignale in an sich bekannter Weise aufgearbeitet werden, um in einer Datenverarbeitungsanlage weiterverarbeitet werden zu können.

Mit 33 ist ein Computer zur Auswertung der Signale der Sensoren 30, 31 bezeichnet, während 34 eine übliche CNC-Steuerung der Schleifmaschine 1 bezeichnet.

Wie bei einem herkömmlichen Nockenwellen-Schleifverfahren geht man auch bei dem erfindungsgemäßen Verfahren zunächst so vor, daß eine Tabelle von Werten für die C-Achse 14 und die X-Achse 23 aufgestellt wird, d.h. eine Folge von Steuerbefehlen, mit denen die Motoren 13 und 22 relativ zueinander betätigt werden, um eine gewünschte theoretische Nockenform zu erzeugen. Die Steuerbefehle seien dabei mit Cᵢ und Xᵢ bezeichnet.

Würde man nun die Schleifmaschine 1 gemäß Fig. 1 mit diesen Steuerbefehlen Cᵢ, Xᵢ betreiben, so ergaben sich Formfehler der fertig geschliffenen Nocken 11 unter anderem deswegen, weil die bewegten Einheiten der Schleifmaschine 1, also die sich drehende Aufspannung 12, insbesondere aber der Verschobene Schleifschlitten 20 mit dynamischen Schleppfehlern behaftet sind, weil infolge der hohen Masse der genannten Aggregate bei hohen Beschleunigungen auch entsprechende Trägheitskräfte auftreten.

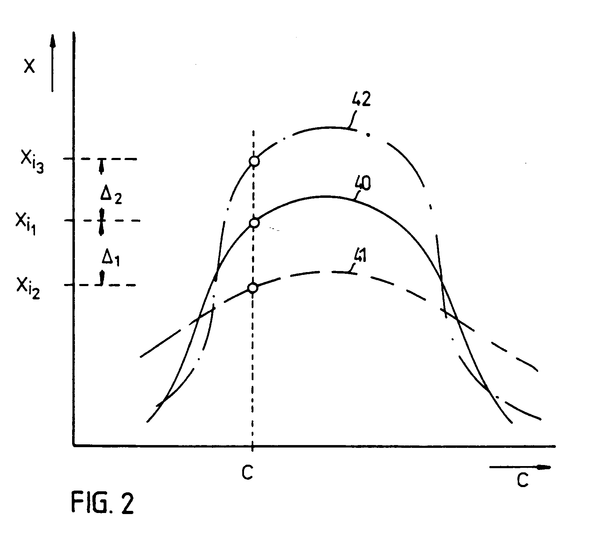

In Fig. 2 bezeichnet 40 ein X/C-Diagramm für eine theoretisch gewünschte Nockenform.

Gemäß dem erfindungsgemäßen Verfahren wird nun zunächst ein "Probelauf" durchgeführt, in dem die Schleifmaschine 1 mit den theoretisch vorgegebenen Steuerbefehlen Cᵢ, Xᵢ, d.h. entsprechend dem Verlauf 40 verfahren wird, jedoch mit der Besonderheit, daß dies ohne eingespanntes Werkstück, d.h. in der Weise geschieht, daß keine Nockenwelle 10 in der Aufspannung 12 eingespannt ist.

Während dieses Probelaufes werden über die Sensoren 30 und 31 die real durchmessenen Drehwinkel C bzw. Verschiebewege X von Aufspannung 12 bzw. Schleifschlitten 20 erfaßt.

Dabei ergibt sich infolge der erläuterten dynamischen Schleppfehler, daß ein vom Idealverlauf 40 abweichender Verlauf, nämlich z.B. der in Fig. 2 gezeigte Verlauf 41, auftritt. Bezieht man die Meßwerte auf dieselbe Winkelstellung Cᵢ, so zeigt sich, daß statt des theoretisch gewünschten Verschiebeweges Xᵢ₁ sich ein realer Verschiebeweg Xᵢ₂ einstellt.

In der Realität kann das Diagramm 41 so aufgenommen werden, daß die Winkelstellungen C und die Verschiebewege X jeweils über der Zeit t aufgenommen und dann später auf jeweils die gleichen Zeitpunkte bezogen zu einem Diagramm gemäß Fig. 2 verarbeitet werden.

Man kann nun die aufgetretene Differenz, also z.B. die in Fig. 2 eingezeichnete Differenz Δ₁ ermitteln, d.h. diejenige Differenz, die infolge der dynamischen Schleppfehler der Schleifmaschine 1 aufgetreten ist.

Um diese Differenz Δ₁ oder eine gegenüber Δ₁ gewichtete zweite Differenz Δ₂ a kann man nun den vorgegebenen Steuerbefehl Xᵢ₁ modifizieren und kommt so zu einem modifizierten Steuerbefehl Xᵢ₃. Insgesamt ergibt dies, wie Fig. 2 zeigt, einen modifizierten Verlauf 42. Man gibt also nach dem erfindungsgemäßen Verfahren definiert falsche Steuerbefehle vor, damit diese unter Berücksichtigung der realen dynamischen Schleppfehler zu einer idealen Nockenkontur führen. Mit den modifizierten Steuerbefehlen des Verlaufes 42 Werden nun nach dem erfindungsgemäßen Verfahren die Nocken 11 der zu bearbeitenden Nockenwellen 10 geschliffen.

## Patentansprüche

1. Verfahren zum Schleifen von Nocken (11) einer Nockenwelle (10) unter Verwendung einer numerisch gesteuerten Nockenwellen-Schleifmaschine (1), bei der die Nockenwelle (10) in einer Aufspannung (12) um eine mit ihrer Längsachse zusammenfallende erste Achse (C-Achse 14) drehbar und ein Schleifschlitten (20) mit einer Schleifscheibe (21) entlang einer zweiten Achse (X-Achse 23) radial auf die Nockenwelle (10) zustellbar ist, wobei die Drehung der Nockenwelle (10) um die erste Achse (14) in Abhängigkeit von der Verschiebung des Schleifschlittens (21) entlang der zweiten Achse (23) einstellbar ist und wobei zum Einstellen der ersten und zweiten Achse (14, 23) eine Folge von Steuerbefehlen (Xᵢ₁, Cᵢ) abhängig von einer vorgegebenen Form des Nockens (11) erstellt wird, gekennzeichnet durch die Schritte:
- zuerst Verdrehen der Aufspannung (12) um die erste Achse (14) und Verschieben des Schleifschlittens (20) entlang der zweiten Achse (23) entsprechend der Folge der Steuerbefehle (Xᵢ₁, Cᵢ) in Abwesenheit einer in die Aufspannung (12) eingespannten Nockenwelle (10);
- dabei Erfassen der von der Aufspannung (12) eingenommenen Drehwinkel (Cᵢ) mittels eines Winkelsensors (30) wie der von dem Schleifschlitten (20) durchmessenen Verschiebewege (Xᵢ₂) mittels eines Längensensors (31);
- Bilden der Differenzen (Δᵢ₁) der jeweils erfaßten Meßwerte für Drehwinkel (Cᵢ) und Verschiebeweg (Xᵢ₂) von den zugehörigen Werten der Steuerbefehle (Xᵢ₁, Cᵢ);
- Modifizieren der einzelnen Steuerbefehle (Xᵢ₃, Cᵢ) in Abhängigkeit von den jeweiligen Differenzen (Δᵢ₁);
- danach Einspannen einer Nockenwelle (10) in die Aufspannung (12) und Schleifen der Nocken (11) mit der Folge der modifzierten Steuerbefehle (Xᵢ₂, Cᵢ).

## Claims

1. A process for grinding cams (11) of a cam shaft (10) using a numerically controlled cam shaft grinding machine (1), during which process the cam shaft (10) is rotatable within a chuck (12) and about a first axis (C-axis 15) coinciding with its longitudinal axis, a grinding sliding carriage (20) with a grinding wheel (21) being adapted to be fed in along a second axis (X-axis 23) in a radial direction towards the cam shaft (10), the rotation of a cam shaft (10) about the first axis (14) being adjustable depending on the grinding carriage (21) displacement along the second axis (23), a sequence of control commands (Xᵢ₁, Cᵢ) for controlling the first and the second axis (14, 23) being generated depending on a predetermined cam (11) shape, characterized by the steps of:
- first rotating the chuck (12) about the first axis (14) and displacing the grinding carriage (20) along the second axis (23) corresponding to the sequence of control commands (Xᵢ₁, Cᵢ) with no cam shaft (10) being chucked in the chuck (12);
- concurrently detecting the chuck (12) angle of rotation (Cᵢ) by means of an angle sensor (30) and detecting the grinding carriage (20) displacement (Xᵢ₂) by means of a length sensor (31);
- computing the differences (Δᵢ₁) between the respective measured angle of rotation (Cᵢ) and displacement (Xᵢ₂) measured values and the corresponding control command (Xᵢ₁, Cᵢ) values;
- modifying individual control commands (Xᵢ₃, Cᵢ) depending on the actual differences (Δᵢ₁);
- thereafter chucking a cam shaft (10) within the chuck (12) and grinding the cams (11) under the control of the sequence of modified control commands (Xᵢ₁, Cᵢ).

## Revendications

1. Procédé de rectification de cames (11) d'un arbre à cames (10) par utilisation d'une rectifieuse d'arbres à cames (1) à commande numérique, dans laquelle l'arbre à cames (10) peut tourner dans une fixation (12) autour d'un premier axe (axe C 14) coïncidant avec son axe longitudinal et un chariot de rectification (20) avec une meule (21) peut être ajusté radialement sur l'arbre à cames (10), le long d'un second axe (axe X 23), la rotation de l'arbre à cames (10) autour du premier axe (14) étant réglable en fonction de la translation du chariot de rectification (21) le long du second axe (23) et pour le réglage du premier et du second axe (14, 23), une séquence d'instructions de commande (Xᵢ₁, Cᵢ) étant établie en fonction d'une forme donnée de la came (11), caractérisé par les étapes suivantes :
- en premier lieu rotation de la fixation (12) autour du premier axe (14) et translation du chariot de rectification (20) le long du second axe (23), conformément à la séquence des instructions de commande (Xᵢ₁, Cᵢ) en l'absence d'un arbre à cames (10) serré dans la fixation (12) ;
- puis détection de l'angle de rotation (Cᵢ) pris par la fixation (12), au moyen d'un capteur angulaire (30) ainsi que des distances de translation (Xᵢ₂) parcourues par le chariot de translation (20) au moyen d'un capteur de longueur (31) ;
- formation de la différence (Δᵢ₁) des valeurs de mesure respectives détectées pour l'angle de rotation (Cᵢ) et la distance de translation (Xᵢ₂) par rapport aux valeurs correspondantes des instructions de commande (X_{i1,} Cᵢ) ;
- modification des différentes instructions de commande (Xᵢ₃, Cᵢ) en fonction des différences respectives (Δᵢ₁) ;
- puis serrage d'un arbre à cames (10) dans la fixation (12) et rectification des cames (11) avec la séquence des instructions de commande ((X_{i2,} Cᵢ) modifiée.
